# EUROPEAN PATENT APPLICATION

(11) **EP 1 477 255 A1**
(43) Date of publication of application: **17.11.2004**
(21) Application number: 04010339.2
(22) Date of filing: 30.04.2004
(51) Int. Cl.: B23D 43/00, B23D 37/10

(54) **Cemented carbide broach and broaching machine**

(30) Priority: 14.05.2003 JP 2003135573
(71) Applicant: Nachi-Fujikoshi Corp., Toyama-shi, Toyama-ken 930 (JP)
(72) Inventor: Kakutani, Soichi, Imizu-gun Toyama (JP); Murai, Yasuhiro, Toyama-shi Toyama (JP)
(74) Representative: Henkel, Feiler & Hänzel

(57) **Abstract**

A broach (19) has a main body (1) of a cemented carbide material. On this main body, a front grip portion (5), a cylindrical portion (34) following the front grip portion and provided with a plurality of guide parts (33) in its outer periphery, a broach cutting edge portion (36) following an end (35) of the cylindrical portion and having a number of cutting edges (2), and a cylindrical extension (12) following the broach cutting edge portion and having a maximum outer periphery dimension to such an extent that the extension does not interfere with a work are integrally provided. On an end surface of the cylindrical extension (12), a load receiving shoulder (3) is formed, which leads to a rear grip portion (11) including a small-diameter part and is orthogonal to or inclined with respect to a broach axis. The load receiving shoulder (3) has a sufficient area to bear a cutting load. A broaching machine grips the rear grip portion (11) with its load receiving surface (15) abutting against the load receiving shoulder (3) of the cemented carbide broach (19). The broach, even when having a small diameter, does not suffer from an insufficient tensile strength of the front grip portion.

## Description

### BACKGROUND OF THE INVENTION

The present invention relates to a pushing type or compressive load type cemented carbide broach and a broaching machine for use in broaching of a spline hole, square hole, key groove, round hole and the like.

A cemented carbide internal broach has cutting edges formed of a cemented carbide material, and is used in working a material having a high hardness of 45 to 65 HRC (Rockwell hardness C scale) after a hardening process. In this cemented carbide broach, when grip portions and the cutting edges are made in one body, the grip portions are formed of the cemented carbide material which has a low tolerance for a tensile or pulling load, and there is a problem that the grip portions break.

In view of this, JP-A-2002-137118 proposes a built-up broach in its Fig. 1 in which a hollow cylindrical cutting edge portion is formed of a cemented carbide material and grip portions are formed of alloy steel. With this built-up construction, however, when the broach is of a small diameter for a work having a small hole dimension, the diameter of a shaft-shaped portion passed through the hollow cylindrical member, which has cutting edges among the members forming the front grip portion, becomes small, and there is a fear that the tensile strength will be insufficient.

On the other hand, JP-A-10-058226 discloses a broaching machine in which a pushing or compressive load, not a pulling or tensile load, is applied to the broach to perform cutting. As seen in Fig. 5 of the publication, this broach has a rear grip portion (tail end portion 25) including a small-diameter part following cutting edges of the broach. A broach gripping portion (storage body 24) of the broaching machine grips this rear grip portion (tail end portion 25), and the broach gripping portion (storage body 24) and the broach are secured so as to be immobile. A work is supported on a vertically movable work table. When the work table is moved in an upward direction, a hole to be processed of the work is pressed onto the broach to perform pushing or compressive broaching.

However, even with this constitution, when the broach has a small diameter, the broach encounters a problem similar to that of the above-described built-up broach. More specifically, in the small-diameter broach, the shaft diameter of the rear grip portion including the small-diameter part, which is held by the broach gripping portion (storage body 24), is small, and there is a possibility that the strength against the compressive load during broaching will be insufficient.

### SUMMARY OF THE INVENTION

The present invention has an object of solving the conventional problems and of providing a cemented carbide broach of sufficient strength against a cutting load exerted during broaching even when it has a small diameter.

Another object of the invention is to provide a broaching machine suitable for use of the above cemented carbide broach.

A cemented carbide broach according to the invention comprises a cutting edge portion having a number of broach cutting edges which are formed of a cemented carbide material and arranged along an axial direction of the broach, and front and rear grip portions fixedly connected to longitudinally opposite ends of the cutting edge portion. The broach is characterized in that a portion having an outer periphery larger than that of the rear grip portion is provided between the cutting edge portion and the rear grip portion, and a load receiving shoulder is formed on an end surface on the rear grip portion side of the large outer periphery portion. The large outer periphery portion has a maximum outer periphery dimension to such an extent that the broach does not interfere with a work, so that the load receiving shoulder has an area for receiving a cutting load acting on the broach in the axial direction.

The broach constructed as above is suitable for use in a broaching machine including a load receiving surface mating with the load receiving shoulder to move a work or the broach in such a manner that a pushing or compressive load is applied to these surfaces to perform cutting. In this case, unlike the conventional broaching in which the front grip portion is pulled or the rear grip portion is pushed, a large load does not act on these grip portions. Therefore, the grip portions do not break even when they are formed of a cemented carbide material or have a small diameter. Further, the load receiving shoulder of the broach has a large area almost equal to that of the cutting edge portion and therefore does not suffer from plastic deformation by the cutting load. The portion, on which the load receiving shoulder is formed, has the maximum outer periphery dimension to such an extent that the portion does not interfere with the work. Accordingly, the work does not interfere with the load receiving portion of the broaching machine even when the load receiving shoulder abuts against the load receiving surface of the broaching machine until the final cutting edge of the broach cutting edge portion passes through the work.

It is preferable that the portion, on which the load receiving shoulder is provided, is a columnar extension extending from the cutting edge portion, and that the load receiving shoulder is vertical to or inclined with respect to a broach axis. Forming the load receiving shoulder in a circular shape can ensure a maximum area. The load receiving shoulder vertical to or inclined with respect to the broach axis is easy to form and suited for receiving the load.

The front grip portion and/or the rear grip portion is preferably formed of a cemented carbide material or alloy steel separately from the cutting edge portion. In this case, the separately formed front grip portion is fixed to a front end of the cutting edge portion and the separately formed rear grip portion is fixed to the load receiving shoulder by one of shrink fit, adhesive, and screw fit.

Alternatively, only the rear grip portion may be formed of a cemented carbide material or alloy steel separately from the cutting edge portion, and the portion of the large outer periphery may be formed integrally with the rear grip portion.

Alternatively, the rear grip portion, the portion of the large outer periphery, the front grip portion, and a small-diameter bar-like shaft portion between the portion of the large outer periphery and the front grip portion may be integrally formed of alloy steel. In this case, the cutting edge portion is preferably formed of a hollow cylindrical body or a plurality of ring bodies and is fitted on and fixed to the small-diameter bar-like shaft portion.

Thus separately forming the front grip portion and/or the rear grip portion from the broach main body can dramatically reduce a cost of the cemented carbide broach using inexpensive materials easy to work such as the alloy steel.

The portion of the large outer periphery preferably has the maximum dimension in a direction vertical to the broach axis, which is almost equal to an outer diameter of an edge groove between adjacent cutting edges in the cutting edge portion. With this construction, the load receiving shoulder can have a maximum area so far as the shoulder can pass through an inner-diameter portion to be processed in a work, and does not suffer from plastic deformation due to the cutting load.

The cemented carbide broach may be used in cutting a work, which has hardness of about 45 to 65 HRC (Rockwell hardness C scale) after a hardening process, at a high speed of 40 m/min to 100 m/min.

In the cemented carbide broach of the invention, as described above, the axial load due to working is received by the load receiving portion of the broaching machine via the load receiving shoulder, and the front grip portion or the rear grip portion is subjected to no tensile load unlike the conventional broach. Therefore, a preload applied to the broach does not largely change during the working, working vibration which raises a problem is not generated, and edge tips do not suffer from chipping. Accordingly, it is possible to efficiently perform satisfactory working at a high working speed of 40 m/min to 100 m/min with use of the broach of the invention.

A broaching machine according to another aspect of the invention has upper and lower broach receiving heads for grasping rear and front grip portions of a broach to hold the broach, and a work table for holding a work. The broaching machine is characterized in that at least one of the upper broach receiving head and the work table is movable to press the work to the cutting edge portion of the broach and perform broaching, and a load receiving surface for abutting against a load receiving shoulder between the rear grip portion and the cutting edge portion of the broach is provided on the upper broach receiving head. When the broach is held by the upper and lower broach receiving heads, the load receiving surface bears the axial load acting on the broach during working via the load receiving shoulder of the broach.

With this construction, the broaching machine cuts the work while applying a pushing or compressive load, not a pulling or tensile load, to the broach. At this time, the axial load acting on the broach is supported not via the front and rear grip portions but via the load receiving shoulder of the large area separately provided on the broach. By this broaching machine, even in broaching wherein a hole dimension or a dimension of a surface to be processed of the work is small and a small-diameter broach is correspondingly used, the grip portions of the broach are not subjected to a large load and do not become insufficient strength.

Other objects, features and advantages of the invention will become apparent from the following description of embodiments of the invention taken in conjunction with accompanying drawings.

### BRIEF DESCRIPTION OF THE DRAWINGS

Figs. 1a and 1b show an integral type cemented carbide broach according to an embodiment of the present invention, in which Fig. 1a is a schematic top plan view and Fig. 1b is a schematic side view;
Fig. 1c is a sectional side view showing a built-up type cemented carbide broach according to another embodiment of the invention;
Figs. 2a and 2b are partially sectional side views respectively showing two modifications of the broach of Fig. 1; and
Fig. 3 is a schematic front view showing a broaching machine according to an embodiment of another aspect of the invention while partially cutting the same.

### DESCRIPTION OF THE PREFERRED EMBODIMENTS

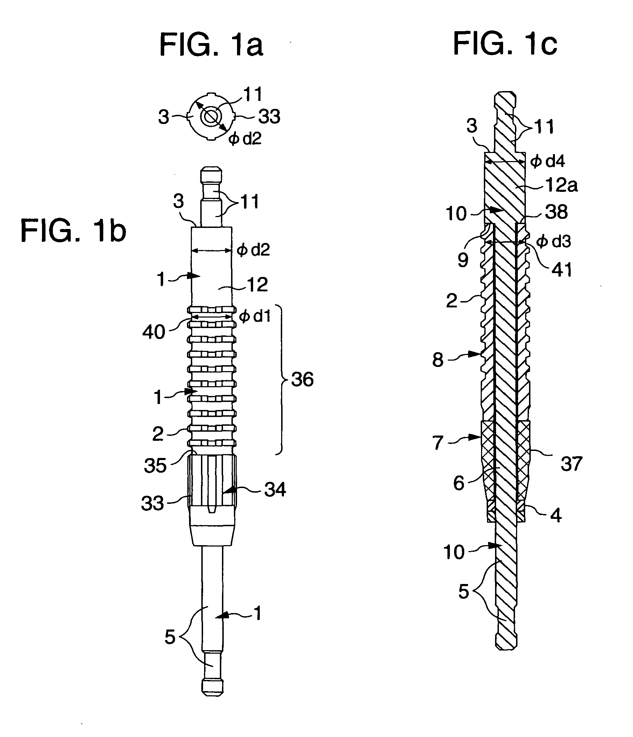

Figs. 1a and 1b show the cemented carbide broach according to the first embodiment of the invention. This broach has an elongated main body 1 formed of a cemented carbide material. On the main body 1, a front grip portion 5, a cylindrical portion 34 following the front grip portion 5, a broach cutting edge portion 36 following an end 35 of the cylindrical portion, a cylindrical extension 12 following the broach cutting edge portion 36, and a rear grip portion 11 following the cylindrical extension 12 are integrally formed along its longitudinal or axial direction.

The cylindrical portion 34 is formed with a plurality of guide parts 33 in its outer periphery. The broach cutting edge portion 36 is provided with a number of cutting edges 2. The cylindrical extension 12 has a maximum outer periphery dimension to such an extent that the broach does not interfere with a work to be processed, and is a portion having an outer periphery larger than that of the rear grip portion. The rear grip portion 11 includes a small-diameter part.

A load receiving shoulder 3 is provided on an end on the rear grip portion 11 side of the cylindrical extension 12. The load receiving shoulder 3 has a sufficient area to support a cutting load acting on the broach. The load receiving shoulder 3 is formed orthogonally to a broach axis. The load receiving shoulder, however, may be inclined with respect to the broach axis. More specifically, the load receiving shoulder may be an annular conical surface as seen in Fig. 1b.

The cylindrical portion 34 may take the form of being provided with the plurality of guide parts 33 in the outer periphery and being unitedly secured to a front end of the broach cutting edge portion 36. The cemented carbide broach, although shown as a round broach in Figs. 1a, 1b, may be a square hole broach or key groove broach. Furthermore, the front grip portion 5 and the rear grip portion 11 may have the small-diameter part, a large-diameter part, or an odd-shaped part. This also applies to embodiments that will be described below.

Fig. 1c shows the cemented carbide broach according to the second embodiment of the invention. This broach has an elongated main body 10 formed of alloy steel. The main body 10 of the alloy steel is integrally formed with a front grip portion 5, a small-diameter bar-like shaft portion 6 following the front grip portion 5, a cylindrical extension 12a following the small-diameter bar-like shaft portion 6, and a rear grip portion 11.

On the small-diameter bar-like shaft portion 6, a hollow cylindrical portion 7 and a hollow cylindrical or ring-shaped assembly 8 are fitted. The hollow cylindrical portion 7 has a plurality of guide parts 37 formed in its outer periphery. A number of cutting edges 2 of a cemented carbide material are provided on the assembly 8. The assembly may be divided into two or more. The cylindrical extension 12a has a maximum outer peripheral portion to such an extent that the broach does not interfere with the work to be processed. On an end on the assembly 8 side of the cylindrical extension 12a, a vertical receiving surface 9 for closely contacting with a rear end surface 38 of the assembly is formed.

On the other hand, a load receiving shoulder 3 is provided on an end on the rear grip portion 11 side of the cylindrical extension 12. The load receiving shoulder 3 has a sufficient area to support a cutting load acting on the broach. The load receiving shoulder 3 is formed perpendicularly to a broach axis. However, the load receiving shoulder may be inclined with respect to the broach axis. That is, in Fig. 1c, the load receiving shoulder 3 may be an annular conical surface.

The hollow cylindrical portion 7 and the assembly 8 are fixed to the main body 10 with a screw formed on the small-diameter bar-like shaft portion 6 of the main body 10 and a nut 4 which engages with the screw. When the nut 4 is strongly fastened, a tensile load is applied to the small-diameter bar-like shaft portion 6 and a compressive load is applied to the assembly 8 as preloads. The assembly 8 of the cemented carbide material and the broach main body 10 of the alloy steel are thus united together. This may alternatively be of the construction that the hollow cylindrical portion 7 with the plurality of guide parts 37 of the cemented carbide material in its outer periphery is disposed and unitedly secured to a front end of the broach cutting edge portion 36 formed with the number of cutting edges 2 of the cemented carbide material.

In the embodiment of Figs. 1a, 1b, an outer diameter d2 of the outer periphery of the cylindrical extension 12 is substantially equal to an outer diameter d1 of the outer periphery of an edge groove 40 defined between the cutting edges 2 adjacent in the axial direction. Similarly, also in the embodiment of Fig. 1c, a diameter d4 of the cylindrical extension 12a is substantially equal to an outer diameter d3 of an edge groove 41 between the cutting edges 2 adjacent in the axial direction. By thus setting, the load receiving shoulder 3 of each embodiment can take a maximum area within a range in which the an inner diameter of the work can pass, and does not suffer from any plastic deformation due to the cutting load.

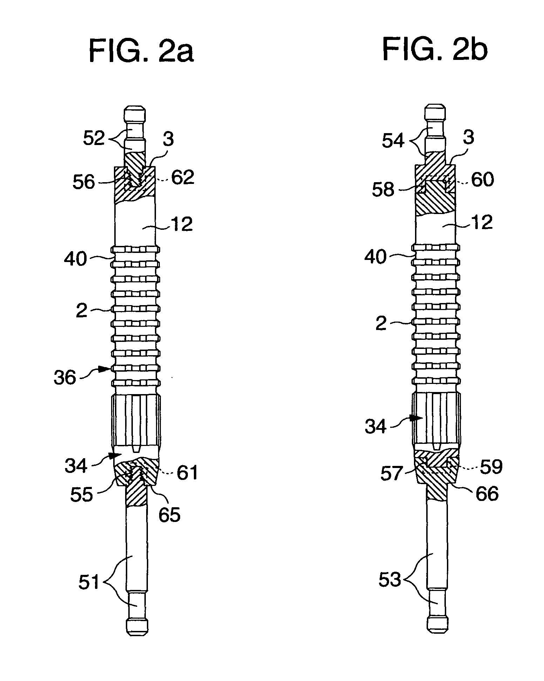

Figs. 2a and 2b show the two modifications of the cemented carbide broach of Fig. 1. The component elements of these examples may be similar to those of the first embodiment except modified parts. The similar elements will be denoted with the same reference numerals, and description of them will be omitted.

In the broach of Fig. 2a, a front grip portion 51 is formed of a cemented carbide material or alloy steel and attached to a front end of a broach cutting edge portion 36 via a cylindrical portion 34 integrally formed on the front end. The front grip portion 51 is unitedly secured by fixing means of a screw fit 55. A rear grip portion 52 is also formed of the cemented carbide material or the alloy steel, and is unitedly secured to the load receiving shoulder 3 with fixing means of a screw fit 56.

Alternatively, only one of the front grip portion 51 and the rear grip portion 52 may be unitedly fixed by similar screw fitting means. Further, the front grip portion 51 and/or the rear grip portion 52 may be unitedly secured with fixing means of a shrink fit or adhesive 61, 62 as shown by a dotted line in Fig. 2a.

In the modification of Fig. 2b, a front grip portion 53 is formed of a cemented carbide material or alloy steel and is unitedly secured to the front end of a cutting edge portion 36 via a cylindrical portion 34 integrally formed on the front end with fixing means of a shrink fit or adhesive 57. A rear grip portion 54 is similarly formed of the cemented carbide material or the alloy steel and is unitedly secured to a cylindrical extension 12 with fixing means of a shrink fit or adhesive 58. The load receiving shoulder 3 is formed on the rear grip portion 54 unitedly fixed by the shrink fit or adhesive 58.

Alternatively, only one of the front grip portion 53 and the rear grip portion 54 may be unitedly fixed with similar means. Further, the front grip portion 53 and/or the rear grip portion 54 may be unitedly secured with fixing means of a screw fit 59, 60 as shown by a dotted line in Fig. 2b in the same manner as in the example of Fig. 2a.

Furthermore, although Figs. 2a, 2b are the modifications of the broach of Fig. 1, the fixing means of Fig. 2a or 2b may be applied to the rear grip portion 11 and the cylindrical extension 12a of Fig. 1c.

In this manner, by forming the front grip portion and/or the rear grip portion separately from the cutting edge portion and by unitedly fixing them to the cutting edge portion, a cost of the cemented carbide broach can be largely lowered with use of inexpensive materials easy to work such as the alloy steel.

In broaching with each broach shown in Figs. 1 and 2, a broaching machine, which will be described later, grasps and holds the front grip portion 5 (or 51 or 53) and the rear grip portion 11 (or 52 or 54) to ensure straightness of the broach. In this state, the load receiving shoulder 3 of the broach is put into abutment against a load receiving surface 15 of a load receiving portion 22 of the broaching machine, and a cutting load of the broach is borne by the load receiving surface to perform the broaching. At this time, even when the hole dimension of the work is small and the broach correspondingly has a small diameter, the front grip portion 5, the bar-like shaft portion 6 (the embodiment of Fig. 1b), and the rear grip portion 11 are not subject to a tensile load and do not break.

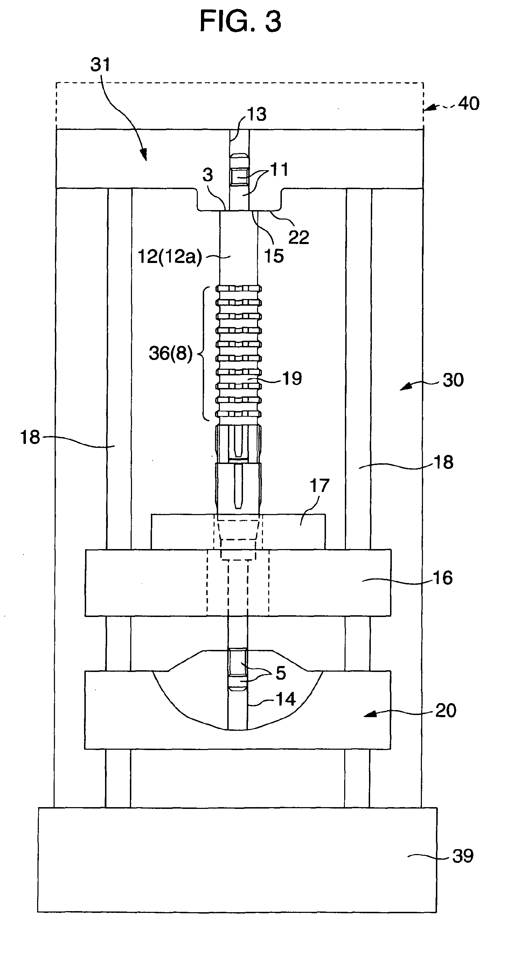

Fig. 3 shows the work moving type broaching machine according to the embodiment of another aspect of the invention for using the cemented carbide broach of the invention. Here, this broaching machine will be described referring to a case where the broaching machine is used in broaching of a material having high hardness corresponding to 45 to 65 HRC (Rockwell hardness C scale) after a hardening process.

A broach 19 for use in working is similar to that of the above-described embodiment or modification. The respective components will be denoted with the same reference numerals, and detailed description of them will be omitted.

The cemented carbide broach 19 has a cutting edge portion 36 (or 8), a cylindrical extension 12 (or 12a), and a rear grip portion 11 including a small-diameter part following the cylindrical extension. The cylindrical extension 12 (or 12a) is set to have an outer diameter d2 (or d4) substantially equal to an outer diameter d1 (or d3) of an edge groove 40 (or 41) between adjacent cutting edges 2 in a cutting edge portion 36 (or 8), and has a maximum outer diameter within a range in which it does not interfere with the work 17. The broach 19 has a load receiving shoulder 3 on an end of the cylindrical extension 12 (or 12a), which extends to the rear grip portion 11. The load receiving shoulder 3 is vertical to a broach axis.

The broaching machine has an upper load receiving head 31, on which a load receiving portion 22 including a load receiving surface 15 is formed. The upper load receiving head 31 grasps the rear grip portion 11 of the broach with the load receiving surface 15 abutting against the load receiving shoulder 3 of the broach 19. In the broaching machine, the work 17 is placed on a work receiving table 16, and the work 17 is pressed onto the broach 19 to perform the broaching so that a compressive load acts on the load receiving surface 15 via the load receiving shoulder 3 of the broach.

The broaching by this broaching machine will be now described. First, the cemented carbide broach 19 is attached to the broaching machine as described above. The work 17 of the high-hardness material corresponding to 45 to 65 HRC (Rockwell hardness C scale) after the hardening process is laid on the work receiving table 16.

A machine main body of the broaching machine comprises a bed 39, a column 30, and the upper load receiving head 31. Slide guide rails 18 for guiding vertical movement of the work table 16 are attached to the column 30. The work table 16 is vertically movable by a servo motor and a ball screw (not shown). A broach receiving head 20 for grasping the front grip portion 5 of the broach 19 is arranged on the slide guide rails 18 to be vertically movable.

Coaxially formed reference holes 14, 13, which can fit with the front grip portion 5, and the small-diameter part and the rear grip portion 11 of the broach 19, are formed in the upper load receiving head 31 and the broach receiving head 20 respectively. The load receiving shoulder 3 of the broach 19 abuts against the load receiving surface 15 of the upper load receiving head 31 of the broaching machine. In this state, the front grip portion 5 and the rear grip portion 11 of the broach are fitted into and held by the reference holes 14, 13, and are grasped by a broach grip device having a known grip catch (not shown). The broach is thus brought in a standby state for working.

When the working starts, the work table 16 rises, and the work 17 is pressed into contact with the cutting edges of the broach 19 and is processed. In this example, broaching is performed with a working speed at 40 m/min to 100 m/min. An axial load due to the working is borne by the load receiving surface 15 of the upper load receiving head 31 of the broaching machine via the load receiving shoulder 3 of the broach 19. Unlike the conventional broach, a tensile load by the working is not applied to the front grip portion 5 and the rear grip portion 11. Therefore, a preload exerted on the broach 19 does not largely vary during the working, any working vibration that raises a problem is not generated, and edge tips do not suffer from chipping. Accordingly, it is possible to efficiently perform satisfactory broaching at a high processing speed as 40 m/min to 100 m/min.

Alternatively, the broach may be moved with respect to a fixed work. In this case, a moving device 40 for vertically driving the upper load receiving head 31 is provided as shown by a dotted line in an upper part of Fig. 3. On the other hand, the work receiving table 16 for placement of the work 17 is fixed. During broaching, the broach 19 attached to the upper load receiving head 31 is driven downwards by the moving device 40 and pressed onto the work 17 to perform the broaching.

According to this broaching machine, the load receiving shoulder 3 provided on the rear part of the broach bears the compressive load due to the cutting to perform broaching even in the working using the cemented carbide assembly broach. With this, any tensile load is not applied to the front grip portion 5, the rear grip portion 11, and the bar-like shaft portion 6 of the broach, and the rigidity can be prevented from lowering due to missing of the preload. As a result, the generation of working vibration can be prevented, and a satisfactory broaching quality can be obtained.

Especially in the working of a high-hardness material of 45 to 65 HRC, although the cutting load increases, the preload exerted on the broach 19 does not largely change during the broaching. Working vibration which raises a problem is not generated, and the edge tips do not chip off. Therefore, satisfactory working can be efficiently performed at a high speed as 40 m/min to 100 m/min. Further, the cemented carbide cutting edges can be prevented from chipping off, and it is possible to largely lengthen a life of the broach tool.

It will be understood by those skilled in the art that the foregoing description has been made on the embodiments of the invention and that various changes and modifications may be made in the invention without departing from the spirit of the invention and the scope of the appended claims.

## Claims

1. A cemented carbide broach comprising a cutting edge portion (8; 36) having a number of broach cutting edges (2) of a cemented carbide material arranged along an axial direction of the broach, and a front grip portion (5; 51; 53) and a rear grip portion (11; 52; 54) fixedly connected to longitudianlly opposite ends of the cutting edge portion respectively, **characterized in that**
a portion having an outer periphery larger than that of the rear grip portion (11; 52; 54) is provided between the cutting edge portion and the rear grip portion, a load receiving shoulder (3) is formed on an end surface on a rear grip portion side of said portion of the large outer periphery, said portion of the large outer periphery has a maximum outer periphery dimension (d2; d4) to such an extent that the broach does not interfere with a work to be processed, so that said load receiving shoulder (3) has an area for receiving a cutting load which acts on the broach in the axial direction.

2. The cemented carbide broach according to claim 1, **characterized in that** said portion of the large outer periphery comprises a columnar extension (12; 12a) extending from the cutting edge portion (8; 36), and said load receiving shoulder (3) is vertical to or inclined with respect to a broach axis.

3. The cemented carbide broach according to claim 1, **characterized in that** said front grip portion (51; 53) and/or said rear grip portion (52) is formed of a cemented carbide material or alloy steel separately from the cutting edge portion (36), and said separately formed front grip portion (51; 53) is fixed to a front end of the cutting edge portion (36) and said separately formed rear grip portion (52) is fixed to the load receiving shoulder (3) by one of fixing means of shrink fit, adhesive and screw fit.

4. The cemented carbide broach according to claim 1, **characterized in that** said rear grip portion (54) is formed of a cemented carbide material or alloy steel separately from the cutting edge portion (36), and said portion of the large outer periphery is formed integrally with the rear grip portion (54) and is fixed to the cutting edge portion (36) by one of fixing means of shrink fit, adhesive and screw fit.

5. The cemented carbide broach according to claim 1 or 2, **characterized in that** said rear grip portion (11), said portion of the large outer periphery, said front grip portion (5), and a small-diameter bar-like shaft portion (10) between the portion of the large outer periphery and the front grip portion are integrally formed of alloy steel, and said cutting edge portion (8) comprises a hollow cylindrical body or a plurality of ring-shaped bodies and is fitted on and fixed'to the small-diameter bar-like shaft portion (10).

6. The cemented carbide broach according to any one of claims 1 to 5, **characterized in that** the maximum dimension (d2; d4) of said portion of the large outer periphery in a direction vertical to a broach axis is substantially equal to an outer diameter (d1; d3) of an edge groove (41) between adjacent cutting edges (2) in the cutting edge portion (8; 36).

7. The cemented carbide broach according to any one of claims 1 to 6, **characterized in that** the broach is for processing a work having hardness of about 45 to 65 HRC (Rockwell hardness C scale) after a hardening process at a speed of 40 m/min to 100 m/min.

8. A broaching machine comprising upper and lower broach receiving heads (31, 20) for holding a broach while grasping rear and front grip portions (11, 5) of the broach, and a work table (16) for holding a work (17), **characterized in that**
at least one of said upper broach receiving head (31) and said work table (16) is movable to press the work onto a cutting edge portion (36) of the broach and perform broaching, and
a load receiving surface (15) is provided on said upper broach receiving head (31) to abut against a load receiving shoulder (3) between the rear grip portion (11) and the cutting edge portion (36) of the broach when the broach is held by the upper and lower broach receiving heads (31, 20), so that said load receiving surface (15) bears an axial load acting on the broach during broaching via the load receiving shoulder (3) of the broach.
